(19) Europäisches Patentamt / European Patent Office / Office européen des brevets

(11) **EP 2 046 618 B1**

(12) **EUROPÄISCHE PATENTSCHRIFT**

(45) Veröffentlichungstag und Bekanntmachung des Hinweises auf die Patenterteilung:
**26.05.2010 Patentblatt 2010/21**

(21) Anmeldenummer: **07730184.4**

(22) Anmeldetag: **15.06.2007**

(51) Int Cl.:
**B60W 30/16** *(2006.01)* **B60W 30/08** *(2006.01)*

(86) Internationale Anmeldenummer:
**PCT/EP2007/055940**

(87) Internationale Veröffentlichungsnummer:
**WO 2008/009525 (24.01.2008 Gazette 2008/04)**

(54) **VERFAHREN ZUR UNTERSTÜTZUNG EINES ÜBERHOLVORGANGS BEI EINEM KRAFTFAHRZEUG**

METHOD FOR SUPPORTING A PASSING MANEUVERS OF A MOTOR VEHICLE

PROCEDE D'AIDE À UNE MANOEUVRE DE DEPASSEMENT SUR UN VEHICULE AUTOMOBILE

(84) Benannte Vertragsstaaten:
**DE FR GB**

(30) Priorität: **19.07.2006 DE 102006033487**

(43) Veröffentlichungstag der Anmeldung:
**15.04.2009 Patentblatt 2009/16**

(73) Patentinhaber: **Robert Bosch GmbH
70442 Stuttgart (DE)**

(72) Erfinder:
• **URBAN, Werner
71665 Vaihingen/Enz (DE)**
• **RANDLER, Martin
88090 Immenstaad (DE)**

(56) Entgegenhaltungen:
EP-A- 1 480 054    DE-A1- 10 114 187
DE-A1-102005 002 504    US-A- 5 999 874
US-A1- 2003 156 015    US-A1- 2004 193 351

EP 2 046 618 B1

**Beschreibung**

Die Erfindung betrifft ein Verfahren und eine Vorrichtung zur Unterstützung eines Überholvorgangs bei einem Kraftfahrzeug mit einer Abstands- und Geschwindigkeitsregeleinrichtung.

Ein Verfahren und eine Vorrichtung mit einer Abstands- und Geschwindigkeitsregeleinrichtung sind in dem Bosch Handbuch aus der gelben Reihe Adaptive Fahrgeschwindigkeitsregelung ACC, Ausgabe 2002, ISBN-3-7782-2034-9, beschrieben. ACC ist die Abkürzung des englischen Begriffs Adaptive Cruise Control. Adaptive Cruise Control erweitert die Geschwindigkeitsregelung in der Art, dass die Fahrgeschwindigkeit an langsamere vorausfahrende Fahrzeuge angepasst wird, wenn diese von einem Objektdetektionssensor im Erfassungsbereich gemessen werden und sich im voraussichtlichen Kursbereich befinden. Der Objektdetektionssensor ist ein Abstandssensor und mittels eines Radarsensors oder Lidarsensors, der mittels Laser abtastet, realisiert. Der voraussichtliche Kursbereich wird nachfolgend auch als Fahrschlauch, Korridor oder Plausibilisierungskorridor bezeichnet. Ist ein Kraftfahrzeug mittels einer Abstands- und Geschwindigkeitsregeleinrichtung, auch als Abstands- und Geschwindigkeitsregler, als ACC - Regler oder kurz als Regler bezeichnet, an die Geschwindigkeit eines vorausfahrenden Kraftfahrzeuges angepasst, so wird das verfolgte Fahrzeug als Ziel-, Folgeobjekt oder als relevantes Objekt und das in der Geschwindigkeit angepasste Fahrzeug als ACC-geregeltes Fahrzeug, kurz als ACC-Fahrzeug, bezeichnet. Ein Erkennen und eine Zuordnung eines vorausfahrenden Fahrzeugs insbesondere als Zielobjekt werden als Plausibilisierung bezeichnet.

Für die Plausibilisierung des relevanten Objekts wird im ACC-Regler eine bestimmte mittlere Breite für den Plausibilisierungskorndor angesetzt mit dem Zielkonflikt, dass der Plausibilisierungskorridor einerseits zur Vermeidung von Nebenspurstörungen nicht zu groß ausgelegt ist, jedoch andererseits groß genug ist, um vorausfahrende Fahrzeuge, die im eigenen Kursbereich liegen, möglichst frühzeitig als Zielobjekte erkennen zu können. Bei einer Annäherung an ein im voraussichtlichen Kursbereich befindlichen Fahrzeug wird das ACC-Fahrzeug in der Weise abgebremst, dass bei Erreichen der eingestellten Wunschzeitlücke eine Überschussgeschwindigkeit zum vorausfahrenden Fahrzeug abgebaut ist. Für den Fall, dass das ACC-Fahrzeug in dieser Folgefahrt verbleiben möchte, stellt diese Annäherungscharakteristik ein angenehmes, weil gewünschtes Systemverhalten dar. Für den Fall, dass der Kraftfahrzeugführer, auch als Fahrer bezeichnet, jedoch keine Folgefahrt beabsichtigt und deshalb bereits während der Annäherung zum Überholen ansetzt, sollte der automatische Abbremsvorgang möglichst schnell unterbrochen werden und das ACC-Fahrzeug zügig wieder auf die eingestellte Setzgeschwindigkeit beschleunigt werden.

Aus der DE 101 14 187 A1 sind ein gattungsgemäßes Verfahren und eine gattungsgemäße Vorrichtung zur Unterstützung eines Überholvorgangs bei einem Kraftfahrzeug mit einer Abstands- und Geschwindigkeitsregeleinrichtung bekannt. Es sind mehrere Kriterien für die Erkennung eines Überholwunsches des Kraftfahrzeugführers angegeben, in erster Linie ist die Betätigung des Fahrnichtungsanzeigers genannt. Eine Überholgeschwindigkeit ist unter anderem in Abhängigkeit von auf der Überholspur vorausfahrenden Kraftfahrzeugen berechenbar. Damit ist eine Überholhilfe beschrieben, welche bei betätigtem Blinkersignal den Plausibilisiemngskorridor in Richtung der Überholspur verschiebt und damit ein früheres Loslassen des vorausfahrenden Fahrzeugs während des Ausschervorgangs gewährleistet. Dabei bleibt unberücksichtigt, dass bei sehr zügiger Fahrweise mit häufigen Annäherungs- und Ausschersituationen das Blinkersignal meistens nicht betätigt wird. In diesen Ausschersituationen wird das ACC-Fahrzeug dann so lange abgebremst, bis das vorausfahrende, als Zielobjekt erkannte Fahrzeug den Plausibilisierungskorridor verlässt, oder mit anderen Worten ausgedrückt, bis ein ausreichend großer seitlicher Versatz zum vorausfahrenden Fahrzeug vorhanden ist und dieses dann losgelassen wird. Oft wird der Annäherungs-Bremsvorgang erst dann beendet, wenn sich das ACC-Fahrzeug bereits vollständig auf der Überholspur befindet. Dies ist für den Kraftfahrzeugführer unplausibel, weil der Kraftfahrzeugführer hier ein Loslassen des zu überholenden Fahrzeugs bereits während des Spurwechsels erwartet, das heißt, beim Überqueren des Fahrspurbegrenzungsstreifens. Auch ist der nachfolgende Verkehr irritiert, weil das vorausfahrende Fahrzeug zum Überholen ansetzt und auf der freien Überholspur noch abbremst.

Der Erfindung liegt von daher die Aufgabe zugrunde, bei nicht betätigtem Blinkersignal ein zügiges Überholen im ACC-geregelten Betrieb zu gewährleisten. Insbesondere soll ein vom Blinkersignal unabhängiges Maß für die Überholabsicht bestimmt werden.

Diese Aufgabe wird gemäß der Merkmale der nebengeordneten Hauptansprüche gelöst. Bei dem Verfahren sind folgende Verfahrensschritte angewandt: ein vorausfahrendes Objekt wird als Zielobjekt ermittelt, ein Abstand des Kraftfahrzeugs zu dem Zielobjekt wird ermittelt, eine Relativgeschwindigkeit zwischen dem Kraftfahrzeug und dem Zielobjekt wird ermittelt und in Abhängigkeit des Abstands und der Relativgeschwindigkeit wird ein Plausibilisierungskorridor um einen Verschmälerungswert verschmälert.

Fährt ein vorausfahrendes Kraftfahrzeug in einem voraussichtlichen Kursbereich des ACC-geregelten Fahrzeuges, so wird das vorausfahrende Fahrzeug als Zielobjekt erkannt. Eine Entfernung zu diesem Objekt wird gemessen und damit ein Abstandswert ermittelt. Dieser Abstandswert wird mit einem vorgebbaren Wert verglichen, der in einem Bereich von 75 m bis 90 m liegt.

Gleichzeitig wird die Relativgeschwindigkeit der beiden Fahrzeuge zueinander ermittelt. Dies kann einerseits über eine ständige Abstandmessung erfolgen und anhand der ständig gemessenen Abstände lässt sich eine Relativgeschwindigkeit beider Fahrzeuge zueinander ermitteln. Anderseits gibt es auch Radargeräte, die anhand reflektierter Radarstrahlung die Relativgeschwindigkeit zwischen beiden Fahrzeugen direkt ermitteln.

Unterschreitet der Abstandswert den vorgegeben Wert und nähern sich die beiden Fahrzeuge einander an, so wird der Plausibilisierungskorridor verschmälert. Dazu weist der Regler zumindest einen Mikroprozessor und zumindest einen Speicher auf, in dem eine Kennlinienschar ablegbar ist. Abstände und Relativgeschwindigkeiten definieren die Kennlinienschar und abhängig eines vorgebbaren Relativgeschwindigkeitswertes und eines vorgebbaren Abstandswertes wird der Plausibilisierungskorridor um einen vorgebbaren Wert verschmälert. Wird also ein vorgebbares Wertepaar aus Abstand und Relativgeschwindigkeit erreicht oder überschritten, so wird der Plausibilisierungskorridor um eine Konstante verschmälert. Der Plausibilisierungskorridor wird in seiner Breite verringert. Das vorausfahrende Fahrzeug wird losgelassen.

Alternativ dazu wird abhängig vom Zielobjekt-Abstand und von der Relativgeschwindigkeit zwischen dem Zielobjekt und dem ACC-geregelten Fahrzeug ein Annäherungs-Kritikalitätsmaß ermittelt. Als zweckmäßig erweist sich hier ein Maß, welches quadratisch zum Zielobjektabstand und quadratisch zur Relativgeschwindigkeit ausgelegt ist. Der Kiitikalitätswert ergibt sich als Quotient aus dem Quadrat der Relativgeschwindigkeit und dem Quadrat des Abstandes:

$$Kritikalität = v_{Rel}{}^2 / d^2$$

Damit wird in einem ersten Schritt ein Maß für die Überholwahrscheinlichkeit ermittelt. Abhängig von dem Wert der Überholwahrscheinlichkeit wird ein Verschmälerungswert ermittelt. Die Verschmälerung erfolgt schrittweise oder anders ausgedrückt gleitend. Mit geringer werdendem Abstand und größer werdender Relativgeschwindigkeit wächst der Betrag der Verschmälerung beziehungsweise wird die Breite des Plausibilisierungskonidors geringer. Das vorausfahrende Fahrzeug wird bereits bei entsprechend kleinem seitlichen Versatz losgelassen. In einem zweiten Schritt wird der Verschmälerungsbetrag, im Folgenden auch als dycCorrlmplicitOvertake bezeichnet, für den Plausibilisierungskorridor ermittelt. Bei geringer Kritikalität findet keine Verschmälerung statt.

Ist eine solch starke Annäherung zum Zielobjekt erfolgt, dass der ACC -Regler dies nicht mehr ausregeln kann und somit ein Ausweichmanöver mit großer Wahrscheinlichkeit erfolgen wird, so liegt eine maximale Kritikalität vor. Eine maximale Kritikalität ist mit einem Wert gleich oder größer $0,16 *(1/s^2)$ gegeben. Dann findet eine maximale Verschmälerung um eine halbe Fahrzeugbreite oder Spurbreite statt.

Ein Verschmälerungsmaß lässt sich mittels einer zweiten Konstanten, die einen Betrag von 5,0 aufweist, wie folgt berechnen:

$$dycCorrimplicitOvertake \ [m] = 5,0* \ v_{rel}{}^2 / d^2 \ [1/sec^2]$$

In Situationen mit vermuteter Überholabsicht wird also der Plausibilisierungskorridor auf der Seite verschmälert, die der Überholspur abgewandt ist, um so das zu überholende Fahrzeug schneller auf der Nachbarspur zuzuordnen und so ein schnelleres Loslassen des Zielobjekts zu erzwingen. Damit ist ein flüssiger Überholvorgang gewährleistet, auch wenn kein Blinker gesetzt wird.

In vorteilhafter Weise wird ein Kursversatz zwischen dem Kraftfahrzeug und dem Zielobjekt ermittelt und in Abhängigkeit des Kursversatzes wird der Plausibilisierungskorridor um den Verschmälerungswert verschmälert. Der Plausibilisierungskorridor wird also in Abhängigkeit des Abstands, der Relativgeschwindigkeit und des Kursversatzes um den Verschmälerungswert verschmälert. In vorteilhafter Weise ist der Kursversatz, also der laterale Versatz des Zielobjektes relativ zum vorausberechneten Fahrkurs des ACC-Fahrzeugs berücksichtigt. Nur wenn ein bestimmter Mindestkursversatz vorhanden ist, kann davon ausgegangen werden, dass ein nachfolgender Überholvorgang ausgeführt wird. Das ist dann gegeben, wenn das ACC-Fahrzeug in Richtung Überholspur eine halbe Fahrzeugbreite versetzt zum Zielobjekt fährt.

In vorteilhafter Weise ist die Überholhilfe an den Verkehrssinn gekoppelt. Bei Rechtsverkehrssystem ist nur die rechte Seite des Plausibilisierungskorridors angepasst und bei Linksverkehrssystem entsprechend nur die linke Seite.

Zum besseren Verständnis der Erfindung wird nachstehend ein Ausführungsbeispiel anhand der Zeichnung näher erläutert.

Es zeigt

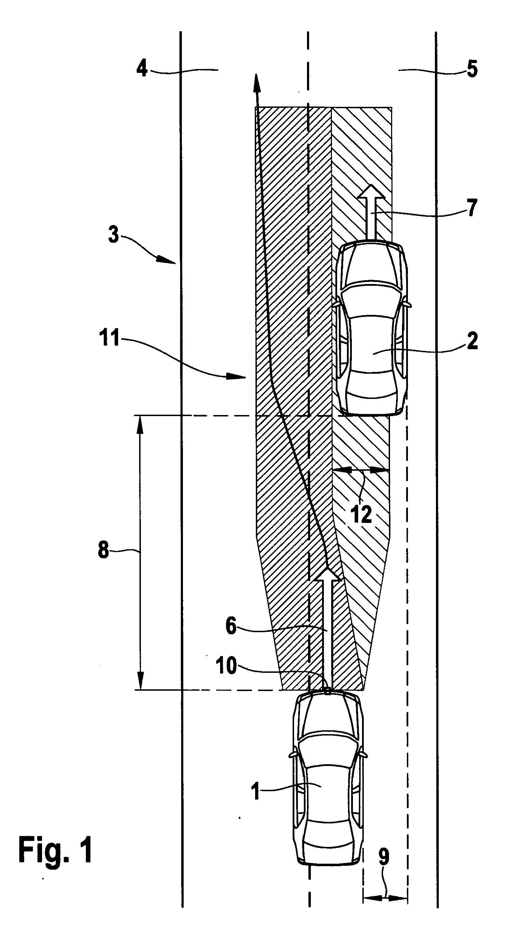

Fig. 1     ein ACC geregeltes Fahrzeug hinter einem vorausfahrenden Fahrzeug.

Figur 1 zeigt ein ACC geregeltes Fahrzeug 1 hinter einem vorausfahrenden Fahrzeug 2 auf einer Straße 3 mit zwei Fahrspuren 4 und 5. Die beiden Fahrzeuge 1,2 bewegen sich in gleiche Richtungen 6 und 7, wobei die Richtungspfeile 6 und 7 als Vektoren über Vektorlängen die Geschwindigkeiten vorgeben. Der Vektor 6 des ACC-geregelten Fahrzeugs ist länger als der Vektor 7 und damit die Geschwindigkeit größer als die Geschwindigkeit des vorausfahrenden Fahrzeugs 2. Das ACC-geregelte Kraftfahrzeug weist einen Abstand 8 und einen Kursversatz 9 zu dem vorausfahrenden Fahrzeug 2 auf. Das ACC-geregelte Fahrzeug 1 weist in einem Frontbereich einen Regler 10 mit einem Radargerät auf. Radarstrahlen bestreichen eine horizontale Ebene vor dem Fahrzeug und aus der horizontalen Ebene wird ein Plausibilisierungskorridor 11 ausgewählt. Vor dem ACC-geregelten Fahrzeug 1 in dem Plausibilisierungskonidor 11 fahrende Fahrzeuge 2 werden als relevante Objekte eingestuft. Nähert sich nunmehr das ACC-geregelte Fahrzeug 1 mit einer vorgebbaren Geschwindigkeit an das vorausfahrende Fahrzeug 2 an und unterschreitet einen vorgebbaren Abstand, so wird der Plausibilisierungskorridor 11 um einen Verschmälerungswert 12 verringert und somit das vorausfahrende Fahrzeug 2 losgelassen.

In nachstehender Tabelle ist das Kon-ekturmaß abhängig von Zielobjekt-Abstand und der Zielobjekt Relativgeschwindigkeit dargestellt:

| vRel [m/s] | d[m] | 100 | 75 | 50 | 25 | 10 |
|---|---|---|---|---|---|---|
| **0** | | 0 | 0 | 0 | 0 | 0 |
| **-5** | | 0,0125 | 0,022 | 0,05 | 0,2 | 1,25 |
| **-10** | | 0,05 | 0,069 | 0,2 | 0,8 | 5 |
| **-20** | | 0,2 | 0,36 | 0,8 | 3,2 | 20 |
| **-30** | | 0,45 | 0,8 | 1,8 | 7,2 | 45 |

Tabellenwerte, die einen Wert von 1,8 oder höher aufweisen, werden selbst bei risikobehafteter Fahrweise nicht erreicht.

## Patentansprüche

1. Verfahren zur Unterstützung eines Überholvorgangs bei einem Kraftfahrzeug (1) mit einer Abstands- und Geschwindigkeitsregeleinrichtung (10), mit folgenden Verfahrensschritten:

   - ein vorausfahrendes Objekt (2) wird als Zielobjekt (2) ermittelt,
   - ein Abstand (8) des Kraftfahrzeugs (1) zu dem Zielobjekt (2) wird ermittelt,
   - eine Relativgeschwindigkeit zwischen dem Kraftfahrzeug (1) und dem Zielobjekt (2) wird ermittelt und
   - in Abhängigkeit des Abstands und der Relativgeschwindigkeit wird ein Plausibilisierungskorridor (11) um einen Verschmälerungswert (12) verschmälert.

2. Verfahren nach Anspruch 1, **gekennzeichnet durch** folgende weitere Verfahrensschritte:

   - ein Kursversatz (9) zwischen dem Kraftfahrzeug (1) und dem Zielobjekt (2) wird ermittelt und
   - in Abhängigkeit des Kursversatzes (9) wird der Plausibilisierungskorridor (11) um den Verschmälerungswert (12) verschmälert.

3. Verfahren nach Anspruch 1 oder 2, **dadurch gekennzeichnet, dass** der Verschmälerungswert (12) eine Konstante ist.

4. Verfahren nach Anspruch 1 oder 2, **dadurch gekennzeichnet, dass** der Verschmälerungswert (12) in Abhängigkeit eines vorgebbaren Relativgeschwindigkeitswertes und eines vorgebbaren Abstandswertes wählbar ist.

5. Verfahren nach Anspruch 1 oder 2, **dadurch gekennzeichnet, dass** sich der Verschmälerungswert (12) als Produkt aus einer Konstanten multipliziert mit einem Quotienten aus dem Quadrat der Relativgeschwindigkeit und dem Quadrat des Abstands (8) ergibt.

6. Verfahren zur Unterstützung eines Überholvorgangs bei einem Kraftfahrzeug (1) mit einer Abstands- und Geschwindigkeitsregeleinrichtung (10), mit folgenden Verfahrensschritten:

- ein vorausfahrendes Objekt (2) wird als Zielobjekt (2) ermittelt,
- ein Kursversatz zwischen dem Kraftfahrzeug (1) und dem Zielobjekt (2) wird ermittelt,
- in Abhängigkeit des Kursversatzes (9) wird ein Plausibilisierungskorridor (11) verschmälert.

7. Vorrichtung zur Unterstützung eines Überholvorgangs bei einem Kraftfahrzeug (1) mit einer Abstands- und Geschwindigkeitsregeleinrichtung (10), mittels derer ein vorausfahrendes Objekt (2) als Zielobjekt (2), ein Abstand des Kraftfahrzeugs (1) zu dem Zielobjekt (2) und eine Relativgeschwindigkeit zwischen dem Kraftfahrzeug (1) und dem Zielobjekt (2) ermittelbar ist, **dadurch gekennzeichnet, dass** mittels der Abstands- und Geschwindigkeitsregeleinrichtung (10) in Abhängigkeit des Abstands (8) und der Relativgeschwindigkeit ein Plausibilisierungskorridor (11) verschmälerbar ist.

**Claims**

1. Method for assisting an overtaking manoeuvre of a motor vehicle (1), having an adaptive cruise controller (10), having the following method steps:

   - an object (2) travelling ahead is identified as a target object (2),
   - a distance (8) between the motor vehicle (1) and the target object (2) is determined,
   - a relative speed between the motor vehicle (1) and the target object (2) is determined, and
   - a plausibility-checking corridor (11) is narrowed by a narrowing value (12) as a function of the distance and the relative speed.

2. Method according to Claim 1, **characterized by** the following further method steps:

   - a course offset (9) between the motor vehicle (1) and the target object (2) is determined, and
   - the plausibility-checking corridor (11) is narrowed by the narrowing value (12) as a function of the course offset (9).

3. Method according to Claim 1 or 2, **characterized in that** the narrowing value (12) is a constant.

4. Method according to Claim 1 or 2, **characterized in that** the narrowing value (12) can be selected as a function of a predefinable relative speed value and a predefinable distance value.

5. Method according to Claim 1 or 2, **characterized in that** the narrowing value (12) is obtained as a product of a constant multiplied by a quotient of the square of the relative speed and the square of the distance (8).

6. Method for assisting an overtaking manoeuvre of a motor vehicle (1), having an adaptive cruise controller (10), having the following method steps:

   - an object (2) travelling ahead is identified as a target object (2),
   - a course offset between the motor vehicle (1) and the target object (2) is determined, and
   - a plausibility-checking corridor (11) is narrowed as a function of the course offset (9).

7. Device for assisting an overtaking manoeuvre of a motor vehicle (1), having an adaptive cruise controller (10) by means of which an object (2) travelling ahead can be identified as a target object (2), and a distance between the motor vehicle (1) and the target object (2) and a relative speed between the motor vehicle (1) and the target object (2) can be determined, **characterized in that** a plausibility-checking corridor (11) can be narrowed by means of the adaptive cruise controller (10) as a function of the distance (8) and the relative speed.

**Revendications**

1. Procédé d'assistance à une manoeuvre de dépassement d'un véhicule automobile (1) qui présente un dispositif (10) de régulation de distance et de vitesse, le procédé comportant les étapes suivantes :

   un objet (2) se déplaçant à l'avant est déterminé comme étant un objet cible (2),
   la distance (8) entre le véhicule automobile (1) et l'objet cible (2) est déterminée,

la vitesse relative entre le véhicule automobile (1) et l'objet cible (2) est déterminée et
en fonction de la distance et de la vitesse relative, un corridor de plausibilité (11) est rétréci d'une valeur de rétrécissement (12).

2. Procédé selon la revendication 1, **caractérisé par** les autres étapes ci-dessous :

le décalage de trajectoire (9) entre le véhicule automobile (1) et l'objet cible (2) est déterminé et
en fonction du décalage de trajectoire (9), le corridor de plausibilité (11) est rétréci de la valeur de rétrécissement (12).

3. Procédé selon les revendications 1 ou 2, **caractérisé en ce que** la valeur de rétrécissement (12) est une constante.

4. Procédé selon les revendications 1 ou 2, **caractérisé en ce que** la valeur de rétrécissement (12) peut être sélectionnée en fonction d'une valeur prédéterminée de vitesse relative et d'une valeur prédéterminée de distance.

5. Procédé selon les revendications 1 ou 2, **caractérisé en ce que** la valeur de rétrécissement (12) représente le produit d'une constante multiplié par le quotient entre le carré de la vitesse relative et le carré de la distance (8).

6. Procédé d'assistance à une manoeuvre de dépassement d'un véhicule automobile (1) qui présente un dispositif (10) de régulation de distance et de vitesse, le procédé comportant les étapes suivantes :

un objet (2) se déplaçant à l'avant est déterminé comme étant un objet cible (2),
le décalage de trajectoire entre le véhicule automobile (1) et l'objet cible (2) est déterminé et
en fonction du décalage de trajectoire (9), un corridor de plausibilité (11) est rétréci.

7. Dispositif d'assistance à une manoeuvre de dépassement d'un véhicule automobile (1) qui présente un dispositif (10) de régulation de distance et de vitesse au moyen duquel un objet (2) circulant à l'avant peut être déterminé comme étant un objet cible (2) et la distance entre le véhicule automobile (1) et l'objet cible (2) et la vitesse relative entre le véhicule automobile (1) et l'objet cible (2) peuvent être déterminées,
**caractérisé en ce que**
un corridor de plausibilité (11) peut être rétréci au moyen du dispositif (10) de régulation de distance et de vitesse en fonction de la distance (8) et de la vitesse relative.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10114187 A1